# EUROPÄISCHE PATENTSCHRIFT

(11) **EP 3 473 079 B1**
(45) Veröffentlichungstag und Bekanntmachung des Hinweises auf die Patenterteilung: **11.11.2020**
(21) Anmeldenummer: 18185640.2
(22) Anmeldetag: 26.07.2018
(51) Int. Cl.: A01F 12/20, A01F 12/22, A01F 12/44

(54) **ABSCHEIDEROTOR FÜR EINE ERNTEMASCHINE**
SEPARATOR ROTOR FOR A HARVESTER
ROTOR DE SÉPARATION POUR MOISSONEUSE BATTEUSE

(30) Priorität: 27.09.2017 DE 102017122399
(43) Veröffentlichungstag der Anmeldung: 24.04.2019
(73) Patentinhaber: CLAAS Selbstfahrende Erntemaschinen GmbH, 33428 Harsewinkel (DE)
(72) Erfinder: Holtmann, Bernd, 48324 Sendenhorst (DE); Bußmann, Jens, 49179 Ostercappeln (DE)
(74) Vertreter: CLAAS Gruppe

(56) Entgegenhaltungen:
- EP-A2- 1 495 668
- EP-B1- 0 340 876
- EP-B1- 0 514 820

## Beschreibung

Die Erfindung bezieht sich auf einen Abscheiderotor für eine Erntemaschine, mit radial vom Rotor abstehenden Arbeitswerkzeugen und mit einem hohlzylindrischen Rotorgrundkörper, an welchem Halteelemente unlösbar befestigt sind, an welchen die Arbeitswerkzeuge lösbar befestigbar sind.

Bei nach dem Axialflußprinzip arbeitenden Erntemaschinen weist die Abscheideeinrichtung eine Abscheidekorbanordnung, mit verschiedenen Deckeln und einem Abscheiderotor auf, der innerhalb des Abscheidekorbs angeordnet ist. Der Abscheiderotor weist auf seiner Mantelfläche Mitnahmeelemente auf, die in den Gutstrom eingreifen und das Gut um den Abscheiderotor herum rampenartig befördern und dabei auch auflockern. Die Mitnahmeelemente können dabei höheren Belastungen ausgesetzt werden, insbesondere wenn es zu Verstopfungen im Rotor kommt.

Aus der EP 340 876 B1 ist bereits ein gattungsgemäßer Abscheiderotor bekannt, bei welchem auf der Umfangsfläche des Rotorgrundkörpers Halteelemente aufgeschweißt sind, an welchen die Mitnehmerelemente angeschraubt sind. Der Rotorgrundkörper behält dabei seine geschlossene hohlzylindrische Form bei, so dass das Gewicht des Rotors durch die zusätzlichen, aufgeschweißten Halteelemente erhöht wird. Zwar sind die Mitnahmeelemente an den Halteelementen angeschraubt und können so bei Beschädigungen grundsätzlich ausgetauscht werden und eine Beschädigung der Halteelemente ist hingegen nicht ausgeschlossen.

Eine ähnliche Anordnung ist auch in der EP 514 820 B1 beschrieben. Die Mitnahmeelemente weisen dort die Form eines auf den Kopf gestellten T's auf, wobei die Mitnahmeelemente an dem Quersteg mittels Schrauben befestigt sind. Nachteilig hierbei ist, dass die Muttern und Bolzen im Materialstrom liegen und somit ebenfalls einem Verschleiß ausgesetzt sind, wodurch das Auswechseln der Mitnahmeelemente erschwert wird.

Es ist Aufgabe der vorliegenden Erfindung, einen Abscheiderotor der eingangs genannten Art so zu verbessern, dass einerseits Beschädigungen des Rotors aufgrund Überbelastung vermieden werden und andererseits unter Beibehaltung eines geringen Gewichts des Rotors ein leichtes Auswechseln der Arbeitswerkzeuge bei Bruch oder Verschleiß ermöglicht ist.

Diese Aufgabe wird erfindungsgemäß dadurch gelöst, dass bei einem Abscheiderotor der eingangs genannten Art im Rotorgrundkörper Ausnehmungen vorgesehen sind, in welche die Halteelemente eingesetzt sind.

Die Halteelemente sorgen bei dieser Lösung nur für geringes zusätzliches Gewicht, da der entsprechende Teil des Rotorgrundkörpers mit einer Öffnung versehen ist, welche durch die Halteelemente wieder verschlossen wird. Dadurch, dass die Halteelemente nicht auf die Mantelfläche des Rotorgrundkörpers aufgesetzt sondern in die Ausnehmungen eingesetzt sind, stehen Befestigungsschrauben nicht im Gutstrom, wodurch die Schraubenköpfe nicht verschleißen.

Gemäß einer bevorzugten Ausführungsform sind die Halteelemente als tellerförmiges StanzBiegeteil ausgebildet, mit einem umlaufenden gekröpften Rand, der auf dem Rand der zugehörigen Ausnehmung des Rotorgrundkörpers aufliegt. Die Halteelemente können entlang des aufliegenden Randes mit dem Rotorgrundkörper verschweißt werden, wobei der abgekröpfte Rand stets für eine lagegerechte Ausrichtung und Zentrierung des Halteelementes sorgt. Ferner ist durch den abgekröpften Rand sichergestellt, dass der Mittelteil des Halteelementes, an welchem die Arbeitswerkzeuge lösbar befestigt sind, nicht über die Umfangsfläche des Rotorgrundkörpers überstehen, so dass eventuelle Befestigungsschrauben nicht in den Gutstrom eingreifen.

Gemäß einer weiter bevorzugten Ausführungsform weist das Halteelement einen satteldachförmigen Mittelteil auf, wobei jede Dachhälfte eine Befestigungsbohrung für die Aufnahme des Arbeitswerkzeuges aufweist. Durch diese satteldachförmige Ausgestaltung kommen die Befestigungsmittel noch weiter unterhalb der Ebene der Mantelfläche des Rotorgrundkörpers zu liegen. Besonders vorteilhaft hierbei ist, wenn Befestigungsbohrungen des Halteteils mit einem Schraubgewinde versehen sind. Dieses Schraubgewinde liegt dann im Inneren des Rotorgrundkörpers und ist vor mechanischen Einflüssen durch den Materialstrom geschützt. Besonders bevorzugt ist hierbei, wenn der Dachfirst des Mittelteils des Halteelements unterhalb des Randes des Halteelementes liegt. Dadurch sind die Schraubenköpfe nahezu vollständig außerhalb des Materialstroms. Bevorzugt hierbei ist, wenn der durch die beiden Dachhälften des Mittelteils eingeschlossene Winkel ca. 150° beträgt.

Gemäß einer Weiterbildung der Erfindung ist das Arbeitswerkzeug ein in den Gutstrom eingreifendes Mitnahmeelement ausgebildet, welches die Form eines umgedrehten T's aufweist, wobei der Quersteg des T's lösbar an dem Halteelement befestigt ist, während der übrige Teil des Mitnahmeelementes im Wesentlichen radial vom Rotor absteht. Der Quersteg des T's ist dabei an die satteldachförmige Ausgestaltung des Mittelteils des Halteelementes angepaßt. Dadurch liegt praktisch nur der im Wesentlichen radial vom Rotor abstehende Teil des Mitnahmeelementes im Gutstrom.

In diesem Zusammenhang ist es bevorzugt, wenn der abstehende Teil des Mitnahmeelementes eine Sollbruchstelle aufweist. Sollte es aus irgendwelchen Gründen, beispielsweise Fremdkörper oder dergleichen zu einer Überbelastung des Mitnahmeelementes kommen, würde lediglich der radial abstehende Teil des Mitnahmeelementes brechen. Sämtliche Befestigungselemente wären noch intakt, so dass das Mitnahmeelement leicht auszutauschen wäre, ohne dass es zu Beschädigungen an dem Rotor oder dem Halteelement kommt.

Gemäß einer Weiterbildung der Erfindung ist vorgesehen, dass der abstehende Teil des Mitnahmeelementes eine im Wesentlichen tangential zum Rotor verlaufende Befestigungsöffnung aufweist. Auf diese Weise ist es möglich, an den Mitnahmeelementen weitere Werkzeuge zu befestigen. Beispielsweise könnten an nebeneinander liegenden Mitnahmeelementen Leisten angebracht werden.

Besonders bevorzugt ist, wenn das Halteelement im Wesentlichen oval ausgebildet ist, wobei sich die längere Achse des Ovals in Umfangsrichtung des Rotors erstreckt. Auf diese Weise werden auf das Mitnahmeelement bzw. das Arbeitswerkzeug einwirkende Kräfte in erster Linie im Halteelement aufgenommen, welches als Stanzbiegeteil hierzu gut in der Lage ist. Kerbspannungen im Rotormantel werden auf diese Weise vermieden. Besonders bevorzugt ist das Halteelement entlang seines Randes mit dem Rotorgrundkörper verschweißt oder verklebt.

Gemäß einer weiteren Ausführungsform ist das Arbeitselement eine Auswerferleiste, welche mehrere Befestigungsabschnitte aufweist, die im Abstand der auf dem Rotorgrundkörper angebrachten Halteelemente angeordnet sind. Auf diese Weise lassen sich mehrere Halteelemente dazu verwenden, auch eine Auswerferleiste zu befestigen, ohne dass hierfür gesondere Befestigungsmittel vorzusehen sind. Im Idealfall kann der gesamte Rotorgrundkörper mit einem einheitlichen Muster von Ausnehmungen und eingesetzten Halteelementen versehen sein, an denen sämtliche für den Dresch- und Abscheidevorgang benötigten Werkzeuge befestigt werden können.

Schließlich bezieht sich die Erfindung auch auf eine Erntemaschine, insbesondere einen Mähdrescher, die nach dem Axialdurchflußprinzip arbeitet und einen Abscheiderotor entsprechend der Erfindung aufweist.

Im Folgenden wird ein Ausführungsbeispiel der Erfindung näher erläutert. Es zeigen:
Fig. 1 einen erfindungsgemäßen Abscheiderotor,

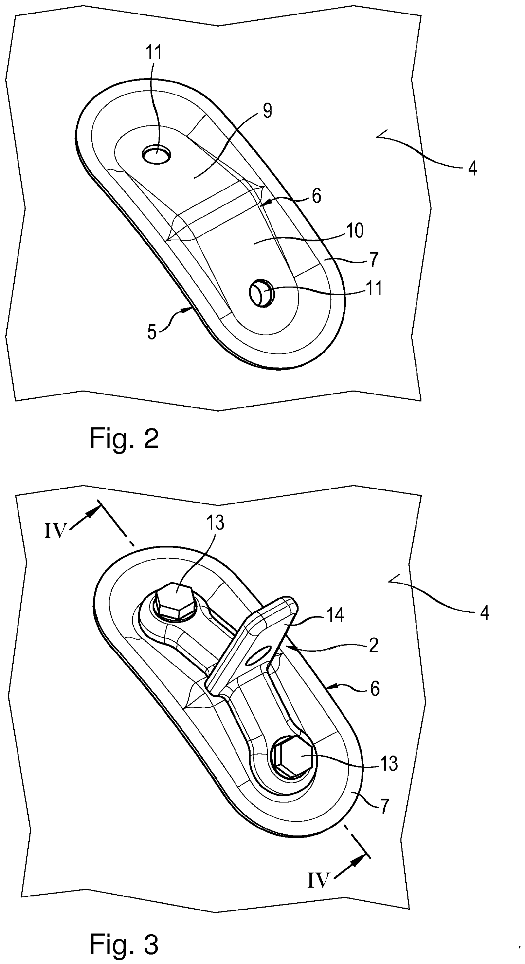

Fig. 2 in perspektivischer Ansicht ein in den Rotor eingelassenes Halteteil,
Fig. 3 in einer perspektvischen Darstellung ein Halteelement mit befestigtem Mitnahmeelement, und
Fig. 4 eine Schnittansicht durch einen Teil des Rotors entlang der Linie IV-IV aus Fig. 3 und
Fig. 5 in einer ähnlichen Ansicht wie in Fig. 4 ein auf den Rotor montiertes Mitnahmeelement mit einer an dem Mitnahmeelement angebrachten Leiste im Querschnitt.

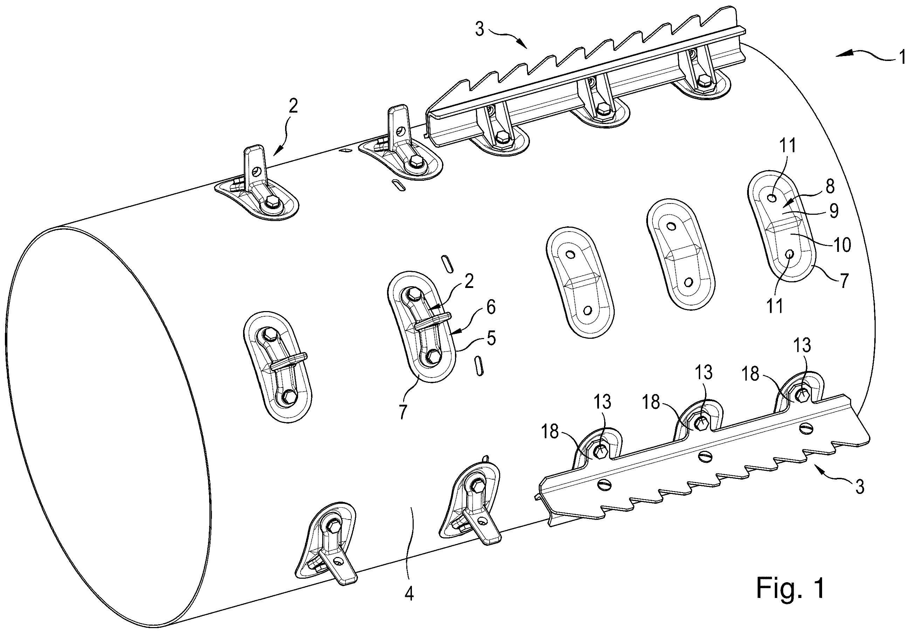

Fig. 1 zeigt einen Teil eines erfindungsgemäßen Abscheiderotors 1 in perspektivischer Ansicht. Der Rotor weist abstehende Arbeitswerkzeuge, nämlich einmal Mitnahmeelemente 2 und zum anderen Auswerferleisten 3 auf.

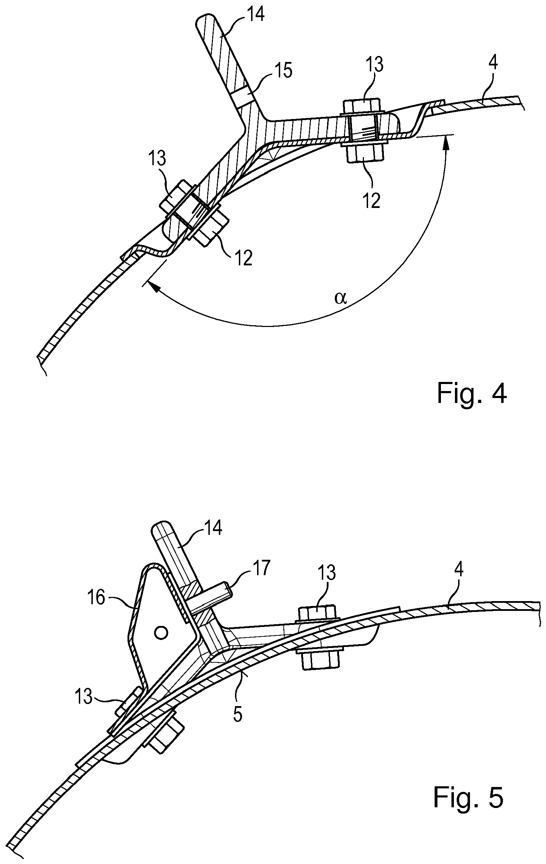

Wie besser aus den Querschnittsansichten in Fig. 4 und 5 hervorgeht, handelt es sich bei dem Abscheiderotor um einen Hohlzylinder, der üblicherweise aus einem Metallblech gerollt und entlang einer hier nicht näher dargestellten Längsnaht verschweißt wird. In diesen Hohlzylinder, der im Folgenden als Rotorgrundkörper 4 bezeichnet wird, sind, vorzugsweise durch Laserschneiden, Ausnehmungen ausgeschnitten, in welche Halteelemente 6 eingesetzt sind. Die Ausnehmungen 5 wie auch die Halteelemente 6 weisen in der Draufsicht eine ovale Form auf und zwar dergestalt, dass die Längsachse des Ovals sich in tangentialer Richtung des Rotorgrundkörpers 4 erstreckt. Die Halteelemente 6 sind tellerförmig mit einem abgekröpften Rand 7 ausgebildet, welcher auf dem umlaufenden Rand der Ausnehmung 5 aufliegt, wie insbesondere gut aus den Fig. 4 und 5 ersichtlich ist. Der Mittelteil 8 der Halteelemente weist eine satteldachförmige Gestaltung auf, wobei die beiden Dachhälften 9 und 10 einen Winkel α von ca. 150° einschließen. Auf beiden Dachhälften 9 und 10 sind Befestigungslöcher 11 vorgesehen, wobei auf der Rückseite der Dachhälften Anschweißmuttern 12 vorgesehen sind. Der Dachfirst, also die Stelle, an der die beiden Dachhälften 9 und 10 zusammenstoßen, steht nur geringfügig über den Garant 7 des Halteelements über.

Das Mitnahmeelement 2 weist im Wesentlichen die Form eines umgedrehten T's auf, wobei der Quersteg an die Neigung der Dachhälften 9 und 10 des Halteelementes 6 angepaßt ist und ebenfalls Befestigungslöcher aufweist, die mit den Befestigungslöchern 11 der Halteelemente 6 fluchten, so dass die Mitnahmeelemente mittels Befestigungsschrauben 13 an den Halteelementen 6 angeschraubt werden können. Der eigentliche Mitnehmer, auch als Paddel 14 bezeichnet, steht im Wesentlichen radial von dem Rotorgrundkörper 4 ab. Er ist im unteren Bereich, also nahe an dem Quersteg mit einer Durchgangsbohrung 15 versehen. Im Bereich der Durchgangsbohrung weist das Paddel 14 eine Sollbruchstelle auf, die hier nicht näher gezeigt ist und durch eine einfache Materialschwächung erzielt wird. Die Durchgangsbohrung 15 kann, wie insbesondere aus Fig. 5 ersichtlich ist, auch zur Befestigung weiterer Werkzeuge dienen. In der Fig. 5 ist hier eine Leiste für die Verwendung beim Leinsamendreschen gezeigt. Die Leiste 16 erstreckt sich über mehrere benachbarte Mitnahmeelemente 2 und weist an ihrer Vorderseite Bolzen 17 auf, mit denen die Leiste in die Durchgangsbohrungen 15 eingesetzt wird. Das hintere Ende der Leiste 16 wird mittels der für die Mitnahmeelemente vorgesehenen Befestigungsschrauben 13 gesichert.

Wie besonders gut aus Fig. 1 ersichtlich ist, können an den Halteelementen 6 auch die Auswerferleisten 3 befestigt werden. Hierzu weisen die Auswerferleisten 3 an ihrer Basis Laschen 18 auf, die entsprechend der Neigung der Dachhälften 9 und 10 der Halteelemente 6 abgebogen sind und ebenfalls Befestigungslöcher 19 aufweisen. Der Abstand der einzelnen Laschen 18 entspricht dem Abstand der Halteelemente 6. Die Auswerferleisten können somit in gleicher Weise befestigt werden wie die Mitnahmeelemente.

Im Folgenden wird nun die Wirkungs- und Funktionsweise der Erfindung näher erläutert.

Zur Herstellung des Abscheiderotors werden zunächst durch Laserschneiden die Ausnehmungen 5 hergestellt, wonach die tellerförmigen Halteelemente 6 eingesetzt und entlang ihres Randes 7 mit dem Rotorgrundkörper 4 verschweißt werden. Der so vorgerichtete Abscheiderotor kann dann mit den Arbeitswerkzeugen bestückt werden, in den die Mitnahmeelemente 2 und die Auswerferleiste 3 angeschraubt werden.

Wenn in Betrieb Beschädigungen an den Mitnahmeelementen auftreten, so sorgen die Sollbruchstellen der Paddel 14 dafür, dass die Paddel abbrechen. Die Mitnahmeelemente können dann auf einfache Weise ausgetauscht werden, indem die Befestigungsschrauben 13 gelöst und das defekte Mitnahmeelement durch ein neues Mitnahmeelement 2 ausgetauscht wird. Kräfte, die auf die Mitnahmeelemente ausgeübt werden, werden zunächst über die tellerförmigen Halteelemente übertragen. Diese sind aufgrund ihrer Ausbildung als Stanzbiegeteil in der Lage, Kräfte aufzunehmen und ohne Kraftspitzen zu übertragen. Die Schweißnaht, entlang des Randes 7 der Halteelemente, liegt in einer nur gering belasteten Zone, so dass Überbelastungen der Mitnahmeelemente wahrlich nicht negativ auf den Rotorgrundkörper 4 auswirken. Und ein weiterer Vorteil ist auch darin zu sehen, dass die Befestigungsschrauben 13 weitestgehend außerhalb des Materialflusses entlang des Rotors liegen. Die Schraubenköpfe unterliegen daher, wenn überhaupt, nur einem geringen Verschleiß, so dass die Schrauben auch nach vielen Betriebsstunden noch einwandfrei zu lösen sind. Die Ausgestaltung der Halteelemente 6 als tellerförmige Einsatzteile hat zudem den Vorteil, dass keine punktförmigen Spitzenlasten auf den Rotorgrundkörper 4 übertragen werden. Das erlaubt, dass der Hohlzylinder, aus dem der Rotorgrundkörper besteht, mit einer geringeren Wandstärke ausgeführt werden kann. Auf diese Weise entsteht ein leichter, betriebssicherer und wartungsfreundlicher Abscheiderotor.

Aufgrund der Vielzahl der Befestigungsstellen kann nicht nur die Anzahl der Auswerfer variiert werden, es können auch zusätzliche Dreschleisten oder anderes Werkzeug einfach durch Anschrauben montiert werden.

## Patentansprüche

1. Abscheiderotor (1) für eine Erntemaschine mit radial vom Rotor abstehenden Arbeitswerkzeugen (2, 3) und mit einem hohlzylindrischen Rotorgrundkörper (4), an welchem Halteelemente (6) unlösbar befestigt sind, an welchen die Arbeitswerkzeuge lösbar befestigbar sind, **dadurch gekennzeichnet, dass** in dem Rotorgrundkörper (4) Ausnehmungen (5) vorgesehen sind, in welche die Halteelemente (6) eingesetzt sind.

2. Abscheiderotor nach Anspruch 1, **dadurch gekennzeichnet, dass** die Halteelemente (6) als tellerförmig Stanzbiegeteile ausgebildet sind, mit einem umlaufenden, gekröpften Rand (7), der auf dem Rand der zugehörigen Ausnehmung (5) des Rotorgrundkörpers (4) aufliegt.

3. Abscheiderotor nach Anspruch 1 oder 2, **dadurch gekennzeichnet, dass** das Halteelement einen satteldachförmigen Mittelteil (8) aufweist, wobei jede Dachhälfte (9, 10) eine Befestigungsbohrung (11) für die Aufnahme des Arbeitswerkzeuges (2, 3) aufweist.

4. Abscheiderotor nach einem der Ansprüche 1 bis 3, **dadurch gekennzeichnet, dass** die Befestigungsbohrung (11) mit einem Schraubgewinde (12) versehen ist.

5. Abscheiderotor nach Anspruch 3 oder 4, **dadurch gekennzeichnet, dass** der Dachfirst des Mittelteils (8) des Halteelements (6) nur geringfügig über den Rand (7) des Halteelements (6) ragt.

6. Abscheiderotor nach einem der Ansprüche 3 bis 5, **dadurch gekennzeichnet, dass** der von den beiden Dachhälften (9, 10) des Mittelteils (8) eingeschlossene Winkel (a) ca. 150° beträgt.

7. Abscheiderotor nach einem der Ansprüche 1 bis 6, **dadurch gekennzeichnet, dass** das Arbeitswerkzeug ein in den Gutstrom eingreifendes Mitnahmeelement (2) ist, welches die Form eines umgedrehten T's aufweist, wobei der Quersteg des T's lösbar an dem Halteelement (6) befestigt ist, während der übrige Teil (14) des Mitnahmeelementes im Wesentlichen radial vom Rotor absteht.

8. Abscheiderotor nach Anspruch 7, **dadurch gekennzeichnet, dass** der abstehende Teil (14) des Mitnahmeelementes (2) eine Sollbruchstelle aufweist.

9. Abscheiderotor nach Anspruch 7 oder 8, **dadurch gekennzeichnet, dass** der abstehende Teil (14) des Mitnahmeelementes (2) eine im Wesentlichen tangential zum Rotor verlaufende Durchgangsbohrung (15) aufweist.

10. Abscheiderotor nach einem der Ansprüche 1 bis 9, **dadurch gekennzeichnet, dass** das Halteelement (6) im Wesentlichen oval ausgebildet ist, wobei sich die längere Achse des Ovals in Umfangsrichtung des Rotors erstreckt.

11. Abscheiderotor nach einem der Ansprüche 1 bis 10, **dadurch gekennzeichnet, dass** das Halteelement (6) entlang seines Randes (7) mit dem Rotorgrundkörper (4) verschweißt ist.

12. Abscheiderotor nach einem der Ansprüche 1 bis 11, **dadurch gekennzeichnet, dass** das Arbeitselement eine Auswerferleiste (3) ist, welche mehrere Befestigungsabschnitte (18) aufweist, die im Abstand der auf dem Rotorgrundkörper (4) angebrachten Halteelemente (6) angeordnet sind.

13. Erntemaschine, insbesondere Mähdrescher, die nach dem Axialdurchflußprinzip arbeitet, **gekennzeichnet durch** einen Abscheiderotor nach einem der Ansprüche 1 bis 12.

## Claims

1. A separating rotor (1) for a harvester comprising working tools (2, 3) projecting radially from the rotor and a hollow-cylindrical rotor base body (4) to which holding elements (6) are non-releasably fixed, to which holding elements the working tools can be releasably fixed, **characterised in that** provided in the rotor base body (4) are recesses into which the holding elements (6) are inserted.

2. A separating rotor according to claim 1 **characterised in that** the holding elements (6) are in the form of plate-shaped stamped bent portions comprising a peripherally extending cranked edge (7) which bears on the edge of the associated recess (5) in the rotor base body (4).

3. A separating rotor according to claim 1 or claim 2 **characterised in that** the holding elements have a gable roof-shaped central portion (8), wherein each roof half (9, 10) has a fixing bore (11) for receiving the working tool (2, 3).

4. A separating rotor according to one of claims 1 to 3 **characterised in that** the fixing bore (11) is provided with a screwthread (12).

5. A separating rotor according to claim 3 or claim 4 **characterised in that** the roof ridge of the central portion (8) of the holding element (6) projects only slightly beyond the edge (7) of the holding element (6).

6. A separating rotor according to one of claims 3 to 5 **characterised in that** the angle (α) enclosed by the two roof halves (9, 10) of the central portion (8) is about 150°.

7. A separating rotor according to one of claims 1 to 6 **characterised in that** the working tool is an entrainment element (2) which engages into the flow of crop and which is in the shape of an inverted T, wherein the transverse bar of the T is fixed releasably to the holding element (6) while the remaining part (14) of the entrainment element projects substantially radially from the rotor.

8. A separating rotor according to claim 7 **characterised in that** the projecting part (14) of the entrainment element (2) has a predetermined breaking location.

9. A separating rotor according to claim 7 or claim 8 **characterised in that** the projecting part (14) of the entrainment element (2) has a through bore (15) extending substantially tangentially relative to the rotor.

10. A separating rotor according to one of claims 1 to 9 **characterised in that** the holding element (6) is of a substantially oval configuration, the longer axis of the oval extending in the peripheral direction of the rotor.

11. A separating rotor according to one of claims 1 to 10 **characterised in that** the holding element (6) is welded along its edge (7) to the rotor base body (4).

12. A separating rotor according to one of claims 1 to 11 **characterised in that** the working element is an ejector bar (3) having a plurality of fixing portions (18) arranged at the spacing of the holding elements (6) mounted on the rotor base body (4).

13. A harvester, in particular a combine harvester, operating in accordance with the axial flow principle, **characterised by** a separating rotor according to one of claims 1 to 12.

## Revendications

1. Rotor séparateur (1) pour une machine de récolte, comprenant des outils de travail (2, 3) et comprenant un corps de base de rotor cylindrique creux (4) auquel sont fixés de manière indémontable des éléments de maintien (6) auxquels les outils de travail sont fixables de manière démontable, **caractérisé en ce que** dans le corps de base de rotor (4) sont prévus des évidements (5) dans lesquels sont logés les éléments de maintien (6).

2. Rotor séparateur selon la revendication 1, **caractérisé en ce que** les éléments de maintien (6) sont conformés en pièces pliées matricées en forme d'assiettes, comprenant un bord périphérique coudé (7) qui repose sur le bord de l'évidement associé (5) du corps de base de rotor (4) .

3. Rotor séparateur selon la revendication 1 ou 2, **caractérisé en ce que** l'élément de maintien comporte une partie centrale en forme de toit à deux pans (8), chaque moitié de toit (9, 10) comportant un trou de fixation (11) pour recevoir l'outil de travail (2, 3).

4. Rotor séparateur selon une des revendications 1 à 3, **caractérisé en ce que** le trou de fixation (11) est pourvu d'un alésage (12).

5. Rotor séparateur selon la revendication 3 ou 4, **caractérisé en ce que** le faîte du toit de la partie centrale (8) de l'élément de maintien (6) ne dépasse que légèrement du bord (7) de l'élément de maintien (6).

6. Rotor séparateur selon une des revendications 3 à 5, **caractérisé en ce que** l'angle (a) formé par les deux moitiés de toit (9, 10) de la partie centrale (8) est d'environ 150°.

7. Rotor séparateur selon une des revendications 1 à 6, **caractérisé en ce que** l'outil de travail est un élément d'entraînement (2) qui s'engage dans le flux de produit et qui présente la forme d'un T inversé, la barre transversale du T étant fixée de façon démontable à l'élément de maintien (6), tandis que la partie restante (14) de l'élément d'entraînement fait saillie sensiblement radialement sur le rotor.

8. Rotor séparateur selon la revendication 7, **caractérisé en ce que** la partie saillante (14) de l'élément d'entraînement (2) comporte un point de rupture privilégié.

9. Rotor séparateur selon la revendication 7 ou 8, **caractérisé en ce que** la partie saillante (14) de l'élément d'entraînement (2) comporte un perçage traversant (15) s'étendant sensiblement tangentiellement par rapport au rotor.

10. Rotor séparateur selon une des revendications 1 à 9, **caractérisé en ce que** l'élément de maintien (6) est conformé de manière sensiblement ovale, l'axe le plus long de l'ovale s'étendant dans la direction circonférentielle du rotor.

11. Rotor séparateur selon une des revendications 1 à 10, **caractérisé en ce que** l'élément de maintien (6) est soudé au corps de base de rotor (4) le long de son bord (7).

12. Rotor séparateur selon une des revendications 1 à 11, **caractérisé en ce que** l'élément de travail est une barrette d'éjection (3), laquelle comporte plusieurs portions de fixation (18) qui sont disposées à distance des éléments de maintien (6) montés sur le corps de base de rotor (4).

13. Machine de récolte, en particulier moissonneuse-batteuse, qui fonctionne selon le principe de traversée axiale, **caractérisée par** un rotor séparateur selon une des revendications 1 à 12.
